Europäisches Patentamt

European Patent Office

Office européen des brevets

(19)

(11) Veröffentlichungsnummer: **0 220 619 B1**

## (12) EUROPÄISCHE PATENTSCHRIFT

(45) Veröffentlichungstag der Patentschrift: **25.09.91**

(51) Int. Cl.5: **B32B 27/32**

(21) Anmeldenummer: **86114370.9**

(22) Anmeldetag: **17.10.86**

(54) **Biaxial orientierte, koextrudierte, opake Mehrschichtfolie.**

(30) Priorität: **26.10.85 DE 3538101**

(43) Veröffentlichungstag der Anmeldung:
**06.05.87 Patentblatt 87/19**

(45) Bekanntmachung des Hinweises auf die
Patenterteilung:
**25.09.91 Patentblatt 91/39**

(84) Benannte Vertragsstaaten:
**BE DE FR GB IT NL**

(56) Entgegenhaltungen:
**EP-A- 0 177 872**
**DE-A- 2 402 120**
**GB-A- 1 453 621**

(73) Patentinhaber: **HOECHST AKTIENGESELL-**
**SCHAFT**
**Postfach 80 03 20**
**W-6230 Frankfurt am Main 80(DE)**

(72) Erfinder: **Bothe, Lothar, Dr. Dipl.-Chem.**
**Am Heiligenhaus 9**
**W-6500 Mainz(DE)**
Erfinder: **Crass, Günther, Dipl.-Ing.**
**Bachstrasse 7**
**W-6204 Taunusstein-Wehen(DE)**
Erfinder: **Dallmann, Hermann, Dr. Dipl.-Chem.**
**Erbsenacker 29**
**W-6200 Wiesbaden-Naurod(DE)**

## Beschreibung

Die Erfindung betrifft eine biaxial orientierte, koextrudierte, opake Mehrschichtfolie mit einer Polypropylenschicht als Basisschicht, auf die ein- oder beidseitig Deckschichten aufgebracht sind.

Aus der DE-B 28 14 311 sind mehrschichtige, koextrudierte, biaxial gestreckte, opake Polypropylenfolien bekannt, deren Basisschicht im wesentlichen aus Polypropylen und Füllstoffen besteht. Die Opazität dieser Folien resultiert daher, daß sie eine große Anzahl von Hohlräumen (Vakuolen) besitzen, die beim Strecken der koextrudierten Folie entstehen. Beim Streckvorgang wird die Polymermatrix an den Korngrenzen der mit dem Polypropylen unverträglichen organischen oder anorganischen Füllstoffe aufgerissen, was zur Entstehung der genannten Vakuolen in der Folie, d.h. zu Hohlräumen in der Folie führt. Es versteht sich von selbst, daß diese Vakuolen oder Mikrohohlräume über das ganze Folienvolumen verteilt sind. Infolge der Beugung des Lichtes beim Übergang vom optisch dichteren Folienmaterial in die optisch dünneren Hohlräume zeigt die Folie eine opake Oberfläche, die ihr einen perlmutterartigen Glanz verleiht. Aufgrund der opaken oder perlmutterartigen Erscheinung besitzen diese Folien ein äußerst werbewirksames Aussehen.

Da Polypropylenfolien unpolar sind und sich, bedingt durch ihre niedrige Oberflächenspannung, nahezu nicht bedrucken lassen, werden sie üblicherweise zur Verbesserung der Benetzbarkeit und der Haftung beim Bedrucken und Kaschieren durch eine Koronaentladung vorbehandelt. Dadurch erhöht sich die Oberflächenspannung der Polypropylenfolien und diese werden bedruckbar. Die Wirkung der Vorbehandlung mittels einer Koronaentladung klingt mit der Zeit ab und erreicht nahezu unabhängig von der Ausgangsintensität der Koronaentladung einen Wert für die Oberflächenspannung, die dem Ausgangswert vor der Koronaentladung nahekommt, was gleichbedeutend damit ist, daß die Folien nur eine begrenzte Zeit bedruckbar bleiben.

Daneben zeigt sich als gravierender Nachteil der Behandlung durch eine Koronaentladung die damit einhergehende drastische Verschlechterung der Geruchsqualität der Folie. Die sensorisch nahezu indifferente Polypropylenfolie wird durch die Koronaentladung in ihrer Geruchsqualität derart verschlechtert, daß sie für viele Anwendungsgebiete, bei denen das Verpackungsgut in direkten Kontakt mit der Folie kommt, nicht mehr geeignet ist.

Die ältere Druckschrift EP-A-0 177 872 (DE-A-34 36 961) beschreibt eine koextrudierte, biaxial orientierte, opake Folie aus einer Basisschicht, die aus Polypropylen und Füllstoffen besteht und ein- oder beidseitig Oberflächenschichten aufweist. Die Folie hat eine Dichte von 0,4 bis 0,6 g/cm³, wobei die Basisschicht 16 bis 20 Gew.% an Füllstoff, bezogen auf das Gesamtgewicht von Polypropylen und Füllstoff, enthält. Diese Folie ist aufgrund ihrer mechanischen Eigenschaften insbesondere für den Dreheinschlag von kleinen Gegenständen, wie Bonbons, geeignet.

Aufgabe der Erfindung ist es, für Verpackungszwecke eine Mehrschichtfolie mit einer Polypropylenschicht als Basisschicht zur Verfügung zu stellen, die opak ist, ohne Vorbehandlung durch eine Koronaentladung über lange Zeit versiegel- und bedruckbar sowie geruchlos ist.

Diese Aufgabe wird erfindungsgemäß dadurch gelöst, daß zumindest eine der Deckschichten aus einem Kopolyester in Form von Polykondensaten aus Terephthalsäure, Isophthalsäure und Ethylenglykol oder Butandiol besteht und ohne Koronabehandlung bedruckbar ist und daß die Dichte der Mehrschichtfolie kleiner/gleich 0,75 g/cm³ ist.

In Weiterbildung der Erfindung besteht die eine Deckschicht aus einer Kopolyesterschicht und die gegenüberliegende Deckschicht aus einem heißsiegelfähigen polyolefinischen Siegelrohstoff aus $C_2$-, $C_2C_3$-, $C_2C_4$-, $C_3C_4$-, $C_2C_3C_4$- Rohstoffen oder Mischungen dieser Rohstoffe.

Dabei versteht man unter

| | | |
|---|---|---|
| $c_2$ = | Polyethylen | |
| $C_2C_3$ = | ein statistisches Kopolymer aus Ethylen- und Propylen-Einheiten | |
| $C_3C_4$ = | ein statistisches Kopolymer aus Propylen- und Buten-Einheiten | |
| $C_2C_4$ = | ein statistisches Kopolymer aus Ethylen- und Buten-Einheiten | |
| $C_2C_3C_4$ = | ein statistisches Terpolymer aus Ethylen-, Propylen- und Buten-Einheiten. | |

Zweckmäßigerweise ist die Deckschicht aus Kopolyester mit einer Kaltsiegelschicht, beispielsweise einem Kleber, benetzbar. Die Polypropylenschicht enthält beispielsweise einen organischen oder anorganischen Füllstoff als mit dem Polypropylen unverträgliches Additiv, mit einem Anteil von 5 - 30 Gew.-%, insbesondere 10 - 25 Gew.-%. Das Additiv ist z.B. Kalziumkarbonat mit einer mittleren Teilchengröße von 0,2 bis 8 $\mu$m, insbesondere von 1 bis 5 $\mu$m.

Für Verpackungszwecke beträgt die Gesamtdicke der Mehrschichtfolie 15 - 100 $\mu$m, insbesondere 20 - 80 $\mu$m, wobei die Dicke der einzelnen Deckschicht 0,2 bis 3 $\mu$m, insbesondere 0,5 bis 1,5 $\mu$m beträgt. In einer bestimmten Ausführungsform der Erfindung ist die Dichte der Basisschicht 0,55 g/cm³.

Die Mehrschichtfolie nach der Erfindung wird als kalt-/heißsiegelfähige, bedruckbare, geruchlose und opake Verpackungsfolie, insbesondere für Schokolade, verwendet.

Die durch Koextrusion hergestellte, ein- oder beidseitig beschichtete, nacheinander in Längsrichtung bei einer Temperatur von 120 - 130° C und in Querrichtung bei einer Temperatur von 160 - 170° C gestreckte opake Mehrschichtfolie hat eine Polypropylen-Basisschicht, die im wesentlichen aus Polypropylen und anorganischen oder organischen Füllstoffen besteht. Die Folie ist um das 5- bis 7fache längsgestreckt und um das 8- bis 10fache quergestreckt und weist eine Dichte von kleiner/gleich 0,75 g/cm³ auf.

Ist die Füllstoffmenge kleiner als 5 Gew.-%, bezogen auf Polypropylen, so wird die angegebene Dichte nicht erreicht. Ist sie andererseits größer als 30 Gew.-%, kann die Folie bei den genannten Bedingungen nicht mehr gestreckt werden. Ebenso wie die Füllstoffmenge muß auch die Teilchengröße des pulverförmigen Füllstoffes in den angegebenen Grenzen gehalten werden. Neben der Füllstoffmenge und der Füllstoff-Teilchengröße müssen auch die Längs- und Querstreckverhältnisse im angegebenen Bereich liegen, damit die gewünschte Folie erhalten wird.

Weitere Einzelheiten der Polypropylenfolie ergeben sich aus der DE-A 34 36 961, in der auch das Verfahren zur Herstellung der Polypropylenfolie näher beschrieben ist.

Die Schmelze des die Schichten bildenden Polymer wird durch eine Flachdüse koextrudiert, die durch Koextrusion erhaltene Folie durch Abkühlen verfestigt, anschließend bei einer Temperatur von 120 bis 130° C im Verhältnis von 5 bis 7:1 längsgestreckt und bei einer Temperatur von 160 bis 170° C im Verhältnis von 8 bis 10:1 quergestreckt und zuletzt die biaxial gestreckte Folie thermofixiert.

Das Polypropylen der Basisschicht kann ein Homo- oder Kopolymerisat des Propylens oder eine Mischung aus Propylen-Homo- und Propylen-Kopolymerisaten sein. In den Kopolymerisaten beträgt die Komonomermenge im allgemeinen maximal 10 Gew.-%, bezogen auf das Kopolymerisat. Bevorzugte Komonomere sind Ethylen und Buten-(1).

Bei den Füllstoffen handelt es sich um die üblichen anorganischen oder organischen, mit Polypropylen unverträglichen, pulverförmigen Materialien. Anorganische Füllstoffe sind bevorzugt und sind u.a. Aluminiumoxid, Aluminiumsulfat, Kaliumsulfat, Kalziumkarbonat, Magnesiumkarbonat, Silikate, wie Aluminiumsilikat (Kaolinton) und Magnesiumsilikat (Talkum), Siliziumdioxid und/oder Titanoxid, wobei Kalziumkarbonat, Siliziumdioxid, Titandioxid oder Mischungen davon bevorzugt eingesetzt werden. Insbesondere wird Kalziumkarbonat bevorzugt verwendet. Die Füllstoffmenge beträgt 5 bis 30 Gew.-%, insbesondere 10 bis 25 Gew.-%, bezogen auf das Gewicht des vorhandenen Polypropylens. Die Basisschicht kann auch zweckmäßige Additive, wie Antioxidantien, Antistatika, Farbstoffe und/oder Stabilisatoren in einer jeweils wirksamen Menge enthalten.

Bei den Deckschichten handelt es sich in der Regel um Kopolyester in Form von thermoplastischen Polykondensationsprodukten aus zwei oder mehreren mehrbasischen aliphatischen oder aromatischen Karbonsäuren und zweiwertigen Alkoholen.

Sie können sowohl durch direkte Veresterung der Karbonsäuren und Alkohole als auch nach dem Umesterungsverfahren unter Verwendung der üblichen Katalysatoren wie Ca-, Li-, Zn- oder Mn-Salzen und Stabilisatoren wie Phosphorverbindungen hergestellt werden.

Beispiele für Kopolyester sind Polykondensate aus Terephthalsäure, Isophthalsäure und Ethylenglykol oder Butandiol. Anstelle der Isophthalsäure können auch Adipinsäure, Acaleinsäure oder Sebacinsäure als Komponenten verwendet werden.

Die mehrbasischen Karbonsäuren können zur Verbesserung der Haftung von Beschichtungen noch funktionelle Gruppen enthalten.

Beispiele für derartige Karbonsäuren sind die p-Hydroxybenzoesäure, das 5-Natriumsulfoisophthalat oder die Trimelittsäure.

Die Kombination der verschiedenen Polyester kann auch in Form einer Blockkondensation erfolgen.

Das Verhältnis der eingesetzten Säuren kann im Bereich von 90:10 - 10:90 Mol-% variiert werden. Der Schmelzpunkt des Polykondensats und das Kristallisationsverhalten kann hierdurch den Anforderungen entsprechend eingestellt werden.

Anstelle eines Kopolyesters können auch Mischungen verschiedener Kopolyester eingesetzt werden. Weiterhin können die Kopolyester in Form von Blends mit anderen Polymeren verwendet werden.

Beispiele für die Polymeren, die in den Kopolyester eingemischt werden können, sind Polyolefin-Homo- und Kopolymere wie Polyethylen, Polypropylen, Poly-4-methylpenten, Ethylen-Vinylacetat-Kopolymere oder deren Verseifungsprodukte, Ionomere, Polyamide u.a. Die Art und Menge der zugesetzten Polymeren richtet sich nach den an die Folie gestellten Anforderungen.

Die Kopolyesterschichten können zur Optimierung der Schlupf- und Gleiteigenschaften inerte organische oder anorganische Partikel, Wachse oder Siloxane sowie weiter übliche Zusätze wie Antistatika, Antioxidantien u.a. enthalten.

In einer bestimmten Ausführungsform der Erfindung werden die Kopolyester-Schichten auf beide Seiten der Basisschicht aufgebracht. Das Zusammenführen der Basisschicht aus Polypropylen und der Kopolyesterschichten erfolgt durch Koextrusion der Schmelzen der Schichten, wobei eine sogenannte Koextrusionsmehrschichtdüse eingesetzt wird. Die Deckschichten aus Kopolyester sind ohne Schwierigkeiten mit Kaltsiegelschichten, nämlich Klebern, benetzbar und gut bedruckbar. Ebenso ist es möglich, auf die Kopolyester-Deckschichten siegelfähige Rohstoffe aufzubringen, wodurch die Mehrschichtfolie gleichfalls beidseitig siegelfähig wird und gut bedruckbar ist. Solche Siegelschichten können bekannte Additive, wie beispielsweise Dimethylpolysiloxan enthalten.

Im folgenden sind zwei Beispiele für die opake Mehrschichtfolie sowie Vergleichsbeispiele angeführt.

### Beispiel 1

Es wurde eine Polypropylenschicht mit beidseitig aufgebrachten Deckschichten aus Kopolyester durch eine Flachdüse koextrudiert. Die Mischung bzw. Schmelze der die Basisschicht bildenden Materialien bestand aus 90 Gew.-% Propylen-Homo-Polymerisat und 10 Gew.-% pulverförmigem Kalziumkarbonat mit einer mittleren Teilchengröße von 3 $\mu$m. Die Schmelze der Deckschichten bestand aus Kopolyester. Nach dem Abkühlen der koextrudierten Folie wurde diese in Längsrichtung und anschließend in Querrichtung verstreckt und zuletzt thermofixiert. Die so erhaltene opake Mehrschichtfolie hat eine Dichte von 0,75 g/cm$^3$ und eine Dicke von 40 $\mu$m. Die Dicke der Deckschicht betrug jeweils 1 $\mu$m.

Die erhaltene Folie ist geruchsneutral und leicht mit Kaltsiegelschichten, d.h. Kleber, benetzbar und gut bedruckbar. Die Haftung der Kaltsiegelschichten und der Druckfarben ist gut.

### Beispiel 2

Es wurde eine Polypropylen-Basisschicht mit beidseitig vorhandenen Deckschichten durch eine Flachdüse koextrudiert. Die Schmelze des die Basisschicht bildenden Polypropylens bestand aus 80 Gew.-% Polypropylen-Homo-Polymerisat und 20 Gew.-% pulverförmigem Kalziumkarbonat, mit einer mittleren Teilchengröße von 3,0 $\mu$m. Die Schmelze der Deckschichten bestand aus Kopolyester. Es wurde wie im Beispiel 1 vorgegangen, mit dem Unterschied, daß die Längsstreckung mit einem etwas größeren Streckverhältnis und die Querstreckung mit einem etwas kleineren Streckverhältnis als im Beispiel 1 durchgeführt wurden.

Die so erhaltene opake Mehrschichtfolie hatte eine Dichte von 0,55 g/cm$^3$ und eine Dicke von 40 $\mu$m, die Dicke der Kopolyester-Deckschichten betrug jeweils 1 $\mu$m.

Die Folie ist weitgehend geruchsneutral, leicht mit Kaltsiegelschichten benetzbar und gut bedruckbar. Die Haftung der Kaltsiegelschichten und der Druckfarben ist gut.

### Vergleichsbeispiel 1

Es wurde eine Polypropylenfolie ohne Deckschichten bei etwa 270° C durch eine Flachdüse koextrudiert. Die Schmelze der Mischung der Basisschicht bestand aus 92 Gew.-% Polypropylen-Homo-Polymerisat und 8 Gew.-% pulverförmigem Kalziumkarbonat. Die so erhaltene Polypropylenfolie hatte eine Dichte von 0,75 g/cm$^3$ und eine Dicke von 40 $\mu$m.

Die Folie wurde durch eine Koronaentladung vorbehandelt und war dadurch in einer Zeitspanne von 1-3 Monaten nach ihrer Herstellung gut bedruckbar, entwickelte jedoch einen ausgesprochen unangenehmen Geruch.

### Vergleichsbeispiel 2

Es wurde eine Folie entsprechend den Bedingungen des Vergleichsbeispiels 1 hergestellt, die jedoch nicht durch eine Koronaentladung vorbehandelt wurde. Die erhaltene Folie war geruchsneutral, jedoch weder bedruckbar noch mit Kaltsiegelschichten, wie Klebern, benetzbar.

Obwohl dies in den beiden Beispielen nicht angegeben ist, kann bei der erfindungsgemäßen Mehrschichtfolie die eine Deckschicht aus einer Kopolyesterschicht und die gegenüberliegende Deckschicht aus einem heißsiegelfähigen polyolefinischen Siegelrohstoff bestehen. Bei diesem Siegelrohstoff kann es sich um $C_2$-, $C_2C_3$-, $C_2C_4$-, $C_3C_4$-, $C_2C_3C_4$- Rohstoffe oder Mischungen davon handeln. Der organische oder anorganische Füllstoff der Polypropylenschicht muß stets ein mit dem Polypropylen unverträgliches Additiv sein, wobei der Anteil des Additivs von 5 - 30 Gew.-%, insbesondere von 10 - 25 Gew.-% reicht. Insbesondere wird als Füllstoff Kalziumkarbonat mit einer mittleren Teilchengröße von 0,2 - 8 $\mu$m, vor allem von 1 - 5 $\mu$m, verwendet. Die gesamte Dicke der Mehrschichtfolie beträgt 15 bis 100 $\mu$m, insbesondere 20 - 80 $\mu$m, wobei die Dicke der einzelnen Deckschicht 0,2 - 3 $\mu$m, und hier vor allem 0,5 - 1,5 $\mu$m ist.

Die erhaltene opake Verpackungsfolie ist heißsiegelfähig, bedruckbar und geruchslos. Wird die Kopolyesterschicht mit einem Kleber beschichtet, kann die Verpackungsfolie kaltgesiegelt werden und eignet sich insbesondere für Schokoladen- und Riegelverpackungen.

### Patentansprüche

1. Biaxial orientierte, koextrudierte, opake Mehrschichtfolie, mit einer Polypropylenschicht als Basisschicht, auf die ein- oder beidseitig Deckschichten aufgebracht sind, dadurch gekennzeichnet, daß zumindest eine der Deckschichten aus einem Kopolyester in Form von Polykondensaten aus Terephthalsäure, Isophthalsäure und Ethylenglykol oder Butandiol besteht und ohne Koronabehandlung bedruckbar ist und daß die Dichte der Mehrschichtfolie kleiner/gleich 0,75 g/cm³ ist.

2. Mehrschichtfolie nach Anspruch 1, dadurch gekennzeichnet, daß die eine Deckschicht aus einer Kopolyesterschicht und die gegenüberliegende Deckschicht aus einem heißsiegelfähigen polyolefinischen Siegelrohstoff aus C₂-, C₂C₃-, C₂C₄-, C₃C₄-, C₂C₃C₄- Rohstoffen oder Mischungen dieser Rohstoffe besteht.

3. Mehrschichtfolie nach den Ansprüchen 1 und 2, dadurch gekennzeichnet, daß die Deckschicht aus Kopolyester mit einer Kaltsiegelschicht benetzt ist.

4. Mehrschichtfolie nach Anspruch 1, dadurch gekennzeichnet, daß die Polypropylenschicht einen organischen oder anorganischen Füllstoff als mit dem Polypropylen unverträgliches Additiv, mit einem Anteil von 5 - 30 Gew.-%, insbesondere 10 - 25 Ges.-% enthält.

5. Mehrschichtfolie nach Anspruch 4, dadurch gekennzeichnet, daß das Additiv Kalziumkarbonat mit einer mittleren Teilchengröße von 0,2 bis 8 μm, insbesondere von 1 bis 5 μm ist.

6. Mehrschichtfolie nach Anspruch 1, dadurch gekennzeichnet, daß die Gesamtdicke der Mehrschichtfolie 15 - 100 μm, insbesondere 20 - 80 μm beträgt.

7. Mehrschichtfolie nach den Ansprüchen 1 bis 3, dadurch gekennzeichnet, daß die Dicke der einzelnen Deckschicht 0,2 bis 3 μm, insbesondere 0,5 bis 1,5 μm beträgt.

8. Mehrschichtfolie nach Anspruch 1, dadurch gekennzeichnet, daß die Dichte der Basisschicht 0,50 - 0,60 g/cm³ ist.

9. Verwendung einer Mehrschichtfolie nach Anspruch 3 oder den Ansprüchen 1 bis 3 und 5 bis 9 als kalt-/heißsiegelfähige, bedruckbare, geruchlose und opake Verpackungsfolie.

## Claims

1. Biaxially oriented, co-extruded, opaque multilayer film with a polyprolylene layer as the base layer, onto which top layers have been applied on one or both sides, characterised in that at least one of the top layers comprises a copolyester in the form of polycondensates of terephthalic acid, isophthalic acid and ethylene glycol or butanediol and can be printed without corona treatment, and in that the density of the multilayer film is less than or equal to 0.75 g/cm³.

2. Multilayer film according to Claim 1, characterised in that one top layer comprises a copolyester layer and the opposite top layer comprises a heat-sealable polyolefinic heat-sealing raw material comprising C₂-, C₂C₃-, C₂C₄-, C₃C₄- or C₂C₃C₄ raw materials or mixtures of these raw materials.

3. Multilayer film according to Claims 1 and 2, characterised in that the copolyester top layer has been wetted with a cold-sealing layer.

4. Multilayer film according to Claim 1, characterised in that the polypropylene layer contains an organic or inorganic filler as a polypropylene-incompatible additive, in an amount of 5-30% by weight, in particular 10-25% by weight.

5. Multilayer film according to Claim 4, characterised in that the additive is calcium carbonate having a mean particle size of from 0.2 to 8 μm, in particular from 1 to 5 μm.

6. Multilayer film according to Claim 1, characterised in that the total thickness of the multilayer film is 15-100 μm, in particular 20-80 μm.

7. Multilayer film according to Claims 1 to 3, characterised in that the thickness of the individual top layers is from 0.2 to 3 μm in particular from 0.5 to 1.5 μm.

8. Multilayer film according to Claim 1, characterised in that the density of the base layer is 0.50-0.60 g/cm³.

9. Use of a multilayer film according to Claim 3 or Claims 1 to 2 and 4 to 8 as a cold/heat-sealable, printable, odourless and opaque packaging film.

## Revendications

1. Feuille multicouche opaque, coextrudée, à orientation biaxiale, comportant une couche de polypropylène comme couche de base sur laquelle sont placées, d'un ou des deux côté(s), des couches de recouvrement, caractérisée en ce qu'au moins une des couches de recouvrement est constituée d'un copolyester sous forme de polycondensats d'acide téréphtalique, d'acide isophtalique et d'éthylèneglycol ou de butanediol et est imprimable sans traitement par effet couronne et en ce que la masse volumique de la feuille multicouche est inférieure ou égale à 0,75 g/cm³.

2. Feuille multicouche selon la revendication 1, caractérisée en ce qu'une des couches de recouvrement est constituée d'une couche de copolyester et la couche de recouvrement opposée est constituée d'un matériau de soudure polyoléfinique thermosoudable, à base de matériau en $C_2-$ $C_2C_3-$, $C_2C_4-$, $C_3C_4-$, $C_2C_3C_4-$ ou de mélanges de ces matériaux.

3. Feuille multicouche selon les revendications 1 et 2, caractérisée en ce que la couche de recouvrement en copolyester est imprégnée d'une couche de soudure à froid,

4. Feuille multicouche selon la revendication 1, caractérisée en ce que la couche de polypropylène contient une matière de charge organique ou inorganique comme additif incompatible avec le polypropylène, dans une proportion de 5 à 30% en poids, en particulier de 10 à 25% en poids.

5. Feuille multicouche selon la revendication 4, caractérisée en ce que l'additif est le carbonate de calcium, avec une dimension moyenne des particules de 0,2 à 8 $\mu$m, en particulier de 1 à 5 $\mu$m.

6. Feuille multicouche selon la revendication 1, caractérisée en ce que l'épaisseur totale de la feuille multicouche est comprise entre 15 et 100 $\mu$m, en particulier entre 20 et 80 $\mu$m.

7. Feuille multicouche selon les revendications 1 à 3, caractérisée en ce que l'épaisseur de la couche de recouvrement seule est comprise entre 0,2 et 3 $\mu$m, en particulier entre 0,5 et 1,5 $\mu$m.

8. Feuille multicouche selon la revendication 1, caractérisée en ce que la masse volumique de la couche de base est comprise entre 0,50 et 0,60 g/cm³.

9. Utilisation d'une feuille multicouche selon la revendication 3 ou les revendications 1 à 2 et 4 à 8, en tant que feuille d'emballage opaque, inodore, imprimable et soudable à froid/à chaud.